(19) Europäisches Patentamt
European Patent Office
Office européen des brevets

(11) **EP 2 012 214 B1**

(12) **FASCICULE DE BREVET EUROPEEN**

(45) Date de publication et mention
de la délivrance du brevet:
**05.05.2010 Bulletin 2010/18**

(51) Int Cl.:
**G06F 1/02** (2006.01)

(21) Numéro de dépôt: **08158787.5**

(22) Date de dépôt: **23.06.2008**

(54) **Procédé et dispositif de génération numérique d'une fréquence**

Verfahren und Vorrichtung zur digitalen Erzeugung einer Frequenz

Method and device for digitally generating a frequency

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.06.2007 FR 0756038**

(43) Date de publication de la demande:
**07.01.2009 Bulletin 2009/02**

(73) Titulaire: **FRANCE TELECOM**
**75015 Paris (FR)**

(72) Inventeur: **Kountouris, Apostolos**
**38000, GRENOBLE (FR)**

(56) Documents cités:
**US-A- 4 285 044      US-A- 4 577 287**
**US-A- 4 937 773**

**Description**

L'invention concerne un procédé et un dispositif de génération numérique d'un signal numérique d'une fréquence donnée.

Pour générer numériquement une fréquence, une solution consiste à générer les valeurs discrètes d'une ou plusieurs fonctions trigonométriques, par exemple de cosinus et de sinus, correspondant à la fréquence à générer, ces valeurs discrètes correspondant à des points situés sur les courbes des fonctions trigonométriques utilisées.

Parmi les diverses méthodes existantes de génération numérique de fréquence, il en existe une, qualifiée de "récursive" ou "d'itérative", qui est basée sur des calculs de sinus et cosinus d'angles consécutifs. Cette méthode repose sur l'identité trigonométrique suivante :

$$e^{j\varphi_k} = e^{j(k\varphi_s + \varphi_0)} = e^{j[(k-1)\varphi_s + \varphi_0]} \cdot e^{j\varphi_s} = e^{j\varphi_{k-1}} \cdot e^{j\varphi_s} \tag{1}$$

où

- $\varphi_0$ représente une phase initiale, généralement telle que $\varphi_0 = 0$,
- $\varphi_s$, représente un pas de phase constant, défini par la relation $\varphi_s = 2\pi \cdot f_c/f_s$, où $f_c$, $f_s$ correspondent respectivement à la fréquence à générer et à une fréquence d'échantillonnage du signal numérique généré.
- k représente un indice d'incrémentation de phase pour le calcul de sinus et de cosinus d'angles, ou phases, consécutifs, tel que $k = 1, 2,....$

Posons $x_k = cos\ \varphi_k$ et $y_k = sin\ \varphi_k$.

Il résulte de l'identité (1) que :

$$- \quad x_k = x_{k-1} \cdot \cos\varphi_s - y_{k-1} \cdot \sin\varphi_s \tag{2}$$

$$- \quad y_k = y_{k-1} \cdot \cos\varphi_s + x_{k-1} \cdot \sin\varphi_s \tag{3}$$

Ainsi, la phase initiale $\varphi_0$ et le pas de phase $\varphi_s$ étant connus, les valeurs de sinus et de cosinus des phases $\varphi_k$ suivantes pour k-1, 2, 3, 4, ... se déduisent de manière récursive, à partir des valeurs de cosinus et de sinus de la phase initiale $\varphi_0$. Autrement dit, on peut calculer les valeurs des couples $(x_k, y_k)$ de manière récursive, à partir du couple initial $(x_0, y_0)$.

A titre d'exemple illustratif, nous allons décrire le calcul des sinus et cosinus pour k=1, k=2 et k=3, avec une phase initiale $\varphi_0 = 0°$ et un pas de phase $\varphi_s = 1°$. Pour les besoins des calculs, on calcule et on mémorise le cosinus et le sinus de l'angle $\varphi_s$, $= 1°$ : $\cos(1°) = 0,999848$ et $\sin(1°) = 0,017452$.

Initialement, pour k=0, on a $\cos\ \varphi_0 = 1$ et $\sin\varphi_0 = 0$.

Ensuite, pour k=1, on calcule $\cos\varphi_1$, et $\sin\varphi_1$ à partir de $\cos\varphi_0$ et $\sin\varphi_0$ à l'aide des équations (2) et (3) :

$$x_1 = x_0 \cdot \cos(1°) - y_0 \cdot \sin(1°) = 1 \cdot \cos(1°) - 0 \cdot \sin(1°) = 0,999848$$

$$y_1 = y_0 \cdot \cos(1°) + x_0 \cdot \sin(1°) = 0 \cdot \cos(1°) + 1 \cdot \sin(1°) = 0,017452$$

Ensuite, pour k=2, on calcule $\cos\varphi_2$ et $\sin\varphi_2$ à partir de $\cos\varphi_1$ et $\sin\varphi_1$ à l'aide des équations (2) et (3) :

$$x_2 = x_1 \cdot \cos(1°) - y_1 \cdot \sin(1°)$$
$$= (0,999848) \cdot (0,999848) - (0,017452) \cdot (0,017452) = 0,999391$$

$$y_2 = y_1 \cdot \cos\left(1°\right) + x_1 \cdot \sin\left(1°\right)$$
$$= \left(0,017452\right) \cdot \left(0,999848\right) + \left(0,999848\right) \cdot \left(0,017452\right) = 0,034899$$

Ensuite, pour k=3, on calcule $\cos\varphi_3$ et $\sin\varphi_3$ à partir de $\cos\varphi_2$ et $\sin\varphi_2$ à l'aide des équations (2) et (3) :

$$x_3 = x_2 \cdot \cos\left(1°\right) - y_2 \cdot \sin\left(1°\right)$$
$$= \left(0,999391\right) \cdot \left(0,999848\right) - \left(0,034899\right) \cdot \left(0,017452\right) = 0,998629$$

$$y_3 = y_2 \cdot \cos\left(1°\right) + x_2 \cdot \sin\left(1°\right)$$
$$= \left(0,034899\right) \cdot \left(0,999848\right) + \left(0,999391\right) \cdot \left(0,017452\right) = 0,052336$$

La méthode permet ainsi de calculer de manière récursive les sinus et les cosinus d'angles consécutifs.

Les calculs trigonométriques utilisant des fonctions trigonométriques standards sont consommateurs en temps de calcul. Avec la méthode récursive de calcul trigonométrique d'angles consécutifs qui vient d'être décrite, on calcule les résultats des sinus et cosinus d'angles consécutifs sans faire appel à des fonctions trigonométriques. En effet, les calculs utilisent les résultats des sinus et cosinus du pas de phase $\varphi_s$ et nécessitent seulement de réaliser des opérations de multiplications et d'additions. Cette méthode présente ainsi l'avantage de pouvoir être mise en oeuvre avec des moyens matériels et/ou logiciels simples et d'offrir une vitesse de calcul constante, indépendamment de la précision requise pour la fréquence générée. Son utilisation est donc particulièrement intéressante.

Cependant, une telle méthode de calcul trigonométrique d'angles consécutifs présente un inconvénient majeur : elle est numériquement instable. Cet inconvénient est lié au fait qu'elle est récursive, c'est-à-dire qu'elle calcule les valeurs $(x_k, y_k)$ à partir du résultat $(x_{k-1}, y_{k-1})$ precédemment calculé, et que les moyens de calcul numériques imposent une précision finie pour les calculs. En particulier, les calculs des valeurs $(x_k, y_k)$ sont réalisés à partir de valeurs arrondies avec la précision finie utilisée des valeurs $(x_{k-1}, y_{k-1})$ et des cosinus et de sinus du pas de phase $\varphi_s$. En outre, le résultat fourni par les moyens de calculs pour le couple de valeurs $(x_k, y_k)$ est lui-même une valeur arrondie, une approximation du résultat réel des calculs. De telles approximations produisent, à chaque incrément de phase k, une erreur dans les calculs. Cette erreur alimente les calculs suivants, correspondant à l'incrément de phase (k+1), lesquels l'amplifient encore. En fonction des valeurs initiales des couples $(x_0, y_0)$ et $(x_s, y_s)$, le couple de valeurs calculées $(x_k, y_k)$ peut soit dégénérer vers zéro, soit augmenter vers l'infini. Il s'agit là d'un cercle vicieux évolutif produisant un "effet boule de neige" qui dégrade considérablement et rapidement la précision des calculs. C'est la raison pour laquelle cette méthode de génération numérique de fréquence d'angles consécutifs est inutilisable en pratique.

Les documents US 4285044, US 4577287 et US 4937773 décrivent des méthodes récursives de génération numérique de signaux sinusoïdaux.

US 4285044 propose une méthode pour limiter l'accumulation des erreurs lors de la génération récursive de valeurs successives d'un signal sinusoïdal. Cette méthode utilise un facteur de gain d'amplitude qui est multiplié avec les valeurs générées afin de compenser les erreurs introduites par les approximations faites sur les valeurs calculées.

US 4577287 a pour but de remédier à certains inconvénients de la méthode décrire dans US 4285044, et notamment de simplifier les calculs complexes pour le facteur de gain.

US 4937773 décrit une méthode de génération numérique d'un signal sinusoïdal utilisant une multiplication et une addition par étape de calcul. US 4927773 ne traite pas du problème d'accumulation d'erreurs dû aux approximations.

La présente invention propose un procédé de génération numérique d'une fréquence donnée à l'aide d'un dispositif, dans lequel

-  le dispositif réitère une étape de calcul d'au moins une fonction trigonométrique pour des phases consécutives séparées par un pas de phase $\varphi_s$ qui est fonction de la fréquence à générer, et

-  lors de l'étape de calcul de ladite fonction trigonométrique pour une phase d'indice k, k représentant un indice d'incrémentation de phase suivant le pas de phase $\varphi_s$, le dispositif calcule un résultat de la fonction trigonométrique pour la phase d'indice k à partir de résultats arrondis de la fonction trigonométrique pour la phase précédente d'indice k et pour ledit pas de phase respectivement

qui permet de résoudre le problème d'instabilité numérique précédemment explicité.

A cet effet, un nombre N de résultats arrondis de la fonction trigonométrique pour ledit pas de phase $\varphi_s$ et des

probabilités respectives $p_i$ de sélection desdits N résultats arrondis étant fournis, l'invention réside dans le fait que le dispositif sélectionne l'un des N résultats arrondis pour le pas de phase $\varphi_s$, et calcule le résultat de la fonction trigonométrique pour la phase d'indice k en tenant compte des probabilités de sélection déterminées $p_i$.

L'invention consiste donc à sélectionner chacun des N résultats arrondis de la fonction trigonométrique pour le pas de phase avec une probabilité de sélection prédéfinie. Les probabilités de tirage, ou de sélection, des différents résultats arrondis peuvent ainsi être choisies de manière à assurer une stabilité numérique du procédé de calcul itératif. Au lieu de s'accumuler et donc de s'amplifier, les erreurs d'arrondi successifs se compensent et s'annulent mutuellement.

Dans un mode de réalisation particulier, pour sélectionner l'un des N résultats arrondis pour le pas de phase $\varphi_s$ en tenant compte des probabilités de sélection déterminées $p_i$,

- le dispositif génère un nombre aléatoire (l) uniformément distribuée sur un intervalle de référence;
- l'intervalle de référence étant divisé en $N$ intervalles $I_n$ disjoints de longueurs respectives proportionnelles aux probabilités $p_i$ avec $1 \leq i \leq N$, le dispositif détermine à quel intervalle $I_j$, parmi lesdits N intervalles $I_n$, appartient le nombre aléatoire généré (l);
- et le dispositif sélectionne, parmi les N résultats arrondis de la fonction trigonométrique pour le pas de phase $\varphi_s$, celui ayant la probabilité de sélection $p_j$ correspondant à la longueur de l'intervalle déterminé $I_j$.

Grâce à cela, on tient compte de façon simple et efficace des probabilités respectives de sélection des différents résultats arrondis pour sélectionner ces résultats arrondis lors du processus itératif de calcul.

Avantageusement, les résultats arrondis étant calculés avec une précision finie de $w$ de bits sur la partie fractionnelle, étant supposé que les résultats sont représentés en virgule fixe avec $w$ bits après la virgule, le dispositif arrondit le résultat de la fonction trigonométrique pour la phase d'indice k, obtenu par multiplication des résultats arrondis de la fonction trigonométrique pour la phase précédente d'indice k-1 et pour le pas de phase respectivement, en tronquant la partie fractionnelle dudit résultat pour la phase d'indice k d'une portion de w bits, et détermine la valeur représentée par la portion des w bits tronqués dans l'intervalle de référence afin de générer le nombre aléatoire.

L'invention concerne aussi un dispositif de génération numérique d'une fréquence donnée comportant des moyens de calcul itératif agencés pour réitérer le calcul d'au moins une fonction trigonométrique pour des phases consécutives séparées par un pas de phase $\varphi_s$ qui est fonction de la fréquence à générer, le calcul de ladite fonction trigonométrique pour une phase d'indice k, k représentant un indice d'incrémentation de phase suivant le pas de phase $\varphi_s$, étant réalisé à partir d'un résultat arrondi de la fonction trigonométrique pour la phase précédente d'indice k-1 et d'un résultat arrondi de la fonction trigonométrique pour ledit pas de phase respectivement, caractérisé par le fait qu'il comprend

- des moyens de stockage d'un nombre N de résultats arrondis de la fonction trigonométrique pour ledit pas de phase $\varphi_s$
- des moyens de stockage de probabilités respectives $p_i$, de sélection desdits N résultats arrondis
- des moyens pour sélectionner l'un des N résultats arrondis pour le pas de phase $\varphi_s$, en tenant compte des probabilités de sélection déterminées $p_i$, pour calculer le résultat de la fonction trigonométrique pour la phase d'indice k.

L'invention sera mieux comprise à l'aide de la description suivante du procédé et du dispositif de génération numérique d'une fréquence donnée selon l'invention, en référence aux dessins annexés sur lesquels :

- la figure 1 représente un schéma bloc fonctionnel d'une forme particulière de réalisation du dispositif de l'invention ;
- la figure 2 représente un organigramme d'un mode de réalisation particulier du procédé selon l'invention, correspondant au fonctionnement du dispositif de la figure 1 ;
- les figures 3A et 3B représentent, sur un cercle trigonométrique, un pas de phase $\varphi_s$ utilisé dans le procédé de la figure 2.

Le procédé de l'invention permet de générer un signal numérique à une fréquence numérique donnée, notée $f_c$, par le calcul d'au moins une fonction trigonométrique pour des angles consécutifs. Dans l'exemple particulier de la description, la fonction trigonométrique utilisée est la fonction exponentielle complexe définie de la façon suivante :

$$\mathrm{e}^{jz} = \cos\left(z\right) + j\sin\left(z\right)$$

Rappelons au préalable l'identité trigonométrique suivante :

$$e^{j\varphi_k} = e^{j(k\varphi_s + \varphi_0)} = e^{j[(k-1)\varphi_s + \varphi_0]} \cdot e^{j\varphi_s} = e^{j\varphi_{k-1}} \cdot e^{j\varphi_s} \qquad (1)$$

où

- $\varphi_0$ représente une phase initiale, ici $\varphi_0 = 0$ ,
- $\varphi_s$ représente un pas de phase ici constant, défini par la relation $\varphi_s = 2\pi \cdot f_c/f_s$, où $f_c, f_s$ correspondent respectivement à la fréquence à générer et à une fréquence d'échantillonnage.
- k représente un indice d'incrémentation de phase pour le calcul de sinus et de cosinus d'angles, ou phases, consécutifs.

Le signal généré par le générateur de fréquence est un signal numérique, échantillonné à la fréquence d'échantillonnage $f_s$. Afin de respecter le critère de Nyquist-Shannon, les fréquences $f_s$ et $f_c$ sont telles que $\dfrac{f_s}{f_c} \leq \dfrac{1}{2} \cdot$ Il en résulte que le pas de phase est tel que $\varphi_s \leq \pi$.

La phase initiale $\varphi_0$ étant nulle, on obtient l'identité trigonométrique suivante :

$$e^{j\varphi_k} = e^{j\varphi_{k-1}} \cdot e^{j\varphi_s} \qquad (2)$$

Sur la base de la relation (2), la fonction exponentielle complexe $e^{j\varphi}{}_k$ pour la phase d'indice k se calcule à partir du résultat de la fonction exponentielle complexe $e^{j\varphi k-1}$ pour la phase d'indice k-1 et du résultat de la fonction exponentielle complexe $e^{j\varphi}{}_k$ pour le pas de phase $\varphi_s$.

Posons :

$$- \quad x_k = \cos\varphi_k$$

$$- \quad y_k = \sin\varphi_k$$

Alors, on peut exprimer la fonction exponentielle complexe de la façon suivante:

$$e^{j\varphi_k} = x_k + j \cdot y_k$$

Par ailleurs, par souci de concision, on pose :

$$x_k + j \cdot y_k = \left(x_k, y_k\right)$$

Il résulte de la relation d'identité mathématique (2) les relations suivantes :

$$
\begin{aligned}
k = 0 \quad (x_0, y_0) \; &= \; (\cos\varphi_0, \sin\varphi_0) = \cos\varphi_0 + j \cdot \sin\varphi_0 \\
k = 1, \ldots \quad (x_k, y_k) \; &= \; \cos\varphi_k + j \cdot \sin\varphi_k = \left(x_{k-1}, y_{k-1}\right) \cdot \left(\cos\varphi_s + j \cdot \sin\varphi_s\right) \\
&= \; \left(x_{k-1} + j \cdot y_{k-1}\right) \cdot \left(\cos\varphi_s + j \cdot \sin\varphi_s\right) \\
&= \; \left(x_{k-1} \cdot \cos\varphi_s - y_{k-1} \cdot \sin\varphi_s\right) + j\left(y_{k-1} \cdot \cos\varphi_s + x_{k-1} \cdot \sin\varphi_s\right)
\end{aligned}
\qquad (3)
$$

En pratique, les calculs sont réalisés en précision finie. Dans l'exemple particulier décrit ici non limitatif, il s'agit d'une précision de *w* bits sur la partie fractionnelle (c'est-à-dire sur la partie du nombre situé après la virgule). Ainsi, le résultat du calcul de la fonction exponentielle complexe $e^{j\varphi_k}$ pour la phase d'indice k est obtenu à partir des résultats approchés de la fonction exponentielle complexe respectivement pour la phase d'indice k 1, $e^{j\varphi_{k-1}}$ ,et pour le pas de phase $\varphi_s$, $e^{j\varphi_s}$, et subit lui-même un arrondissement de sa partie fractionnelle sur *w* bits.

Soit $Q_w[\Box]$, un opérateur d'arrondi en w bits sur la partie fractionnelle. Cet opérateur d'arrondi, représenté par la notation $Q_w[.]$, a pour fonction de faire un arrondissement d'un nombre, ayant une partie entière et une partie fractionnelle codée sur un certain nombre bits, en tronquant la partie fractionnelle des bits de poids les plus faibles afin de ne conserver que les *w* bits de la partie fractionnelle de poids les plus forts. Le résultat obtenu est un résultat approché, que l'on appellera aussi par la suite "résultat arrondi" ou "approximation', du nombre considéré, avec une précision finie de *w* bits sur la partie fractionnelle.

Le résultat du calcul de la fonction exponentielle complexe, en précision finie de *w* bits sur la partie fractionnelle, pour la phase d'indice k est donc :

$$Q_w\big[(x_k,y_k)\big]=Q_w\Big[Q_w\big[(x_{k-1},y_{k-1})\big]\cdot Q_w\big[(\cos\varphi_s,\sin\varphi_s)\big]\Big]. \qquad (4)$$

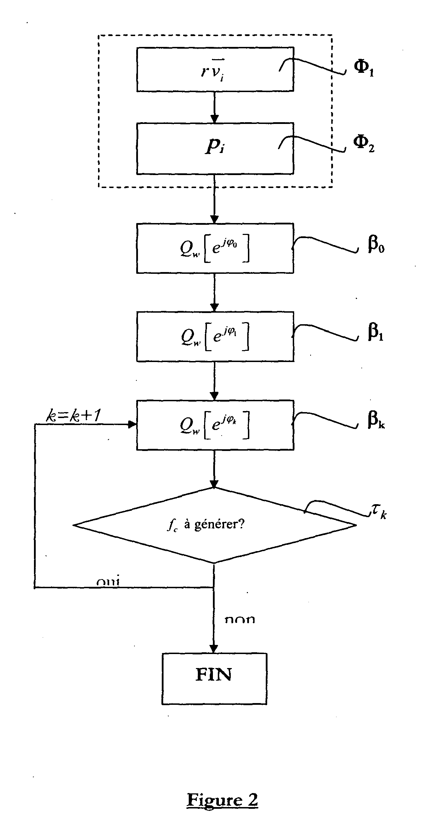

Un mode particulier de réalisation du procédé de l'invention va maintenant être décrit en référence à la figure 2.

Le procédé comprend une phase préliminaire Φ comportant

■ une étape $\Phi_1$ de détermination d'un nombre donné N de résultats arrondis possibles, avec la précision de w bits sur la partie fractionnelle, de $e^{j\varphi_s}$ (c'est-à-dire de la fonction exponentielle complexe pour ledit pas de phase $\varphi_s$);
■ une étape $\Phi_2$ de détermination de probabilités respectives $p_i$ de sélection des *N* résultats arrondis possibles, avec $1 \leq i \leq N$, déterminés à l'étape $\Phi_1$.

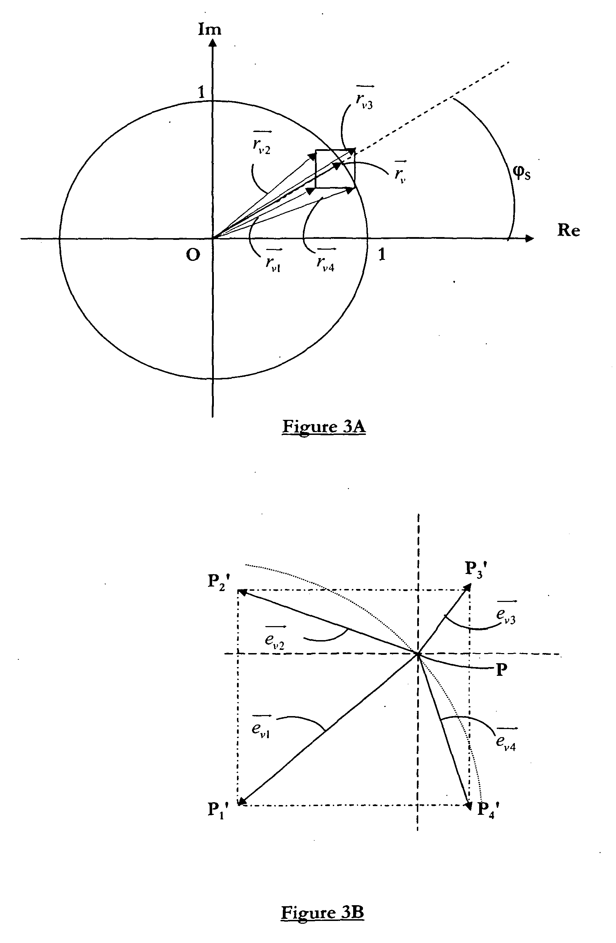

Sur la figure 3A, on a représenté le cercle trigonométrique C dans un plan complexe associé à un repère orthonormé direct $(O,\vec{u},\vec{w})$, où $(O,\vec{u})$ et $(O,\vec{w})$ représentent respectivement l'axe des réels, en abscisses, et l'axe des imaginaires, en ordonnées. Le cercle trigonométrique C est centré sur l'origine O du plan complexe et son rayon est égal à 1.

Dans le plan complexe de la figure 3A, on a également représenté un vecteur $\vec{r}_v$, que l'on appellera par la suite "vecteur rotation de phase", défini par la relations : $\vec{r}_v = \overrightarrow{OP}$, où

- *O* représente l'origine du plan complexe et
- *P* représente le point du plan complexe défini l'expression exponentielle $e^{j\varphi_s}$ et apparaissant sur la figure 3B; il est situé sur le cercle trigonométrique C et correspond à l'angle $\varphi_s$ sur le cercle C ($\varphi_s$ = angle entre l'axe $(O,\vec{u})$ et $\vec{r}_v =\overrightarrow{OP}$),

En définitive, le vecteur rotation de phase $\vec{r}_v$ modélise la fonction exponentielle complexe pour le pas de phase $\varphi_s$, c'est-à-dire $e^{j\varphi_s}$. Dans l'exemple particulier décrit ici, les résultats arrondis de la fonction exponentielle complexe pour le pas de phase $e^{j\varphi_s}$, autrement dit du vecteur rotation de phase $\vec{r}_v$ déterminés à l'étape $\Phi_1$, sont au nombre de N = 4. Ils sont modélisés sur la figure 3A par quatre vecteurs $\vec{r}_{vi}$ avec i =1,2,3,4 tels que $\vec{r}_{vi} =\overrightarrow{OP}_i$', $P_i$' représentant le point du plan complexe défini par l'expression exponentielle $r_{si}e^{j\varphi_s}$ et apparaissant sur la figure 3B. Les quatre points $P_1$' $P_2$', $P_3$', $P_4$' correspondent aux quatre approximations du point P et forment un carré, ayant deux côtés parallèles à l'axe $(O,\vec{u})$ et les deux autres à l'axe $(O,\vec{w})$, à l'intérieur duquel est situé le point P.

Sur la figure 3B, on a représenté de façon plus détaillée le carré formé par les quatre points $P_1$', $P_2$', $P_3$', $P_4$', le point P situé à l'intérieur, ainsi que quatre vecteurs représentant les erreurs d'approximation correspondantes. Ces vecteurs d'erreur d'approximation ou d'arrondi, notés $\vec{e}_{v1}$", $\vec{e}_{v2},\vec{e}_{v3},\vec{e}_{v4}$, sont définis par le point P, constituant l'origine de chacun d'eux, et par les quatre points d'approximation $P_1$', $P_2$', $P_3$', $P_4$' respectivement, de la façon suivante :

$$\overrightarrow{e_{v_i}} = \overrightarrow{PP_i}' \quad pour \quad 1 \leq i \leq 4$$

La sous-étape $\Phi_2$ de détermination des probabilités respectives de sélection des quatre vecteurs d'approximation possibles $\vec{r}_{vi}$ avec i =1, 2, 3, 4 , autrement dit des quatre résultats arrondis correspondant de la fonction exponentielle complexe pour le pas de phase, comprend la résolution du système d'équations suivant :

$$- \sum_{i=1}^{4} p_i = 1 \quad (a)$$

$$- \sum_{i=1}^{4} p_i \cdot \overrightarrow{e_{v_i}} = 0 \Leftrightarrow \begin{cases} \sum_{i=1}^{4} p_i \cdot e_{x_i} = 0 \quad (b) \\ \sum_{i=1}^{4} p_i \cdot e_{y_i} = 0 \quad (c) \end{cases}$$

$$- \min \left\{ \sum_{i=1}^{4} \left| p_i \cdot \overrightarrow{e_{v_i}} \right|^2 \right\} \quad (d)$$

Ce système d'équations traduit plusieurs conditions que doivent respecter les probabilités de sélection $p_1$, $p_2$, $p_3$ $p_4$.

L'équation (a) traduit la condition selon laquelle la somme des probabilités de sélection $p_1, p_2, p_3, p_4$ doit être égale à 1.

Les équations (b) et (c) traduisent la condition selon laquelle, en moyenne, l'erreur d'approximation doit être nulle.

L'équation (d) traduit la condition selon laquelle la variance de l'erreur, qui correspond à l'énergie de l'erreur, doit être minimale.

Pour résoudre ce système d'équations, on procède de la façon suivante :

- on pose $p_4 = x$ ;
- on résout les équations (a), (b) et (c) de manière à exprimer les probabilités $P_1$, $P_2$, $P_3$ en fonction de x ;

- on substitue les probabilités $P_1, P_2, P_3, P_4$ par leurs expressions respectives en fonction de x dans l'expression $\sum_{i=1}^{4} \left| p_i \cdot \overrightarrow{e_{v_i}} \right|^2$ de l'équation (d) afin de déterminer $f(x) = \sum_{i=1}^{4} \left| p_i \cdot \overrightarrow{e_{v_i}} \right|^2$ ;

- on calcule la dérivée première par rapport à x de la fonction $f(x) = \sum_{i=1}^{4} \left| p_i \cdot \overrightarrow{e_{v_i}} \right|^2$, soit $\dfrac{d\left( \sum_{i=1}^{4} \left| p_i \cdot \overrightarrow{e_{v_i}} \right|^2 \right)}{dx}$, et on résout l'équation $\dfrac{d\left( \sum_{i=1}^{4} \left| p_i \cdot \overrightarrow{e_{v_i}} \right|^2 \right)}{dx} = 0$ pour minimiser l'expression $\sum_{i=1}^{4} \left| p_i \cdot \overrightarrow{e_{v_i}} \right|^2$.

Enfin, s'agissant de probabilités, on vérifie que $p_i \geq 0$ pour $i = 1, 2, 3, 4$ . Si c'est n'est pas le cas, on assigne la valeur 0 à chaque probabilité $p_i$ qui est négative et on résout les équations (a), (b) et (c) pour calculer les probabilités inconnues restantes.

La résolution de ce système d'équations permet ainsi d'obtenir les valeurs respectives des probabilités de sélection $P_1, P_2, P_3, P_4$ des vecteurs $\overrightarrow{r}_{vi}$ avec $i = 1, 2, 3, 4$ d'approximation du vecteur de rotation de phase $\overrightarrow{r}_v$.

Suite à cette phase initiale $\Phi$ de calcul des probabilités respectives de sélection des quatre approximations du résultat de la fonction $e^{j\varphi s}$, le procédé comprend l'exécution d'une boucle de calcul, alimentée par les quatre résultats arrondis de la fonction exponentielle complexe pour le pas de phase et par leurs probabilités respectives de sélection. Cette boucle est exécutée tant que la fréquence $f_c$ doit être générée.

Cette boucle comprend la réitération d'une étape de calcul de la fonction exponentielle complexe pour des phases consécutives $\varphi_k$, pour $k = 0,1,2,.....$ Deux phases consécutives sont séparées l'une de l'autre par le pas de phase $\varphi_s$, autrement dit on a la relation :

$$\varphi_k = \varphi_{k-1} + \varphi_s$$

La boucle comprend une première étape $\beta_0$, dite étape d'initialisation, pour l'indice $k = 0$.

Lors de cette étape $\beta_0$, on mémorise la valeur de $Q_w\left[e^{j\varphi_0}\right]$, autrement dit l'arrondi de $e^{j\varphi_0}$ avec une précision de $w$ bits sur la partie fractionnelle, dans la mémoire de stockage 1, le cas échéant à la place du contenu précédent de la mémoire 1.

L'étape $\beta_0$ est suivie d'une étape $\beta_1$ correspondant à l'indice d'incrémentation $k=1$ de calcul de la fonction exponentielle complexe pour la phase $\varphi_1 = \varphi_0 + \varphi_s$. Lors de cette étape $\beta_1$, on réalise les sous-étapes suivantes afin de calculer un arrondi de $e^{j\varphi}{}_k$ avec une précision de $w$ bits sur la partie fractionnelle, noté $Q_w\left[e^{j\varphi_1}\right]$ :

$\beta$1,1) On sélectionne l'un des résultats arrondis de $e^{j\varphi s}$, noté $Q_w\left[e^{j\varphi_s}\right]$, parmi les quatre résultats arrondis déterminés lors de la phase initiale $\Phi$. Autrement dit, en modélisation vectorielle, on sélectionne l'un des quatre vecteurs d'approximation $\vec{r}_{V_i}$ avec i =1, 2, 3, 4 comme approximation du vecteur rotation de phase $\vec{r}_V$. Pour la première sélection (c'est-à-dire pour $k$=1), on sélectionne le vecteur d'approximation $\vec{r}_{V_i}$ le plus probable, c'est-à-dire celui ayant la probabilité $p_i$ de sélection la plus forte. En l'espèce, il s'agit de $\vec{r}_{V3} = r_3 e^{j\varphi}{}_{s3}$.

$\beta$1,2) On multiplie le résultat arrondi de la fonction exponentielle complexe pour la phase précédente $\varphi_0$, soit $Q_w\left[e^{j\varphi_0}\right]$, et le résultat arrondi sélectionné de la fonction exponentielle complexe pour le pas de phase $\varphi_s$, soit $Q_w\left[e^{j\varphi_s}\right] = r_3 e^{j\varphi_{s_3}}$. Autrement dit, on réalise l'opération de multiplication suivante :

$$Q_w\left[e^{j\varphi_0}\right] \cdot Q_w\left[e^{j\varphi_s}\right]$$

On notera que, la multiplication de deux arrondis ayant chacun une précision de $w$ bits sur leur partie fractionnelle fournit un résultat ayant une précision de $2w$ bits sur sa partie fractionnelle.

$\beta$1,3) On calcule ensuite l'arrondi, à l'aide de l'opérateur $Q_w[.]$, du résultat obtenu à la sous-étape précédente $\beta_{1,2}$). On réalise ainsi l'opération suivante :

$$Q_w\left[Q_w\left[e^{j\varphi_0}\right] \cdot Q_w\left[e^{j\varphi_s}\right]\right] = Q_w\left[e^{j\varphi_1}\right]$$

L'opérateur d'arrondi tronque la partie fractionnelle du résultat obtenu à la sous-étape $\beta_{1,2}$) d'une portion de $w$ bits.

On obtient ainsi un résultat arrondi de $e^{j\varphi}{}_s$, noté $Q_w\left[e^{j\varphi_1}\right]$, avec une précision de $w$ bits sur la partie fractionnelle.

$\beta$1,4) On mémorise le résultat arrondi de la fonction exponentielle obtenu pour la phase ($\varphi_1$, noté $Q_w\left[e^{j\varphi_1}\right]$, dans le registre de stockage 1 destiné à alimenter l'étape de calcul pour la phase $\varphi_2$ suivante.

L'étape $\beta_1$ est suivie d'une succession d'étapes $\beta_k$ pour k = 2, 3, ....
Une étape de calcul $\beta_k$ pour k = 2, 3, ..., calcule un arrondi, ou résultat approché, avec une précision de $w$ bits sur la partie fractionnelle de la fonction exponentielle complexe pour la phase $\varphi_k$. Ce résultat approché est noté $Q_w\left[e^{j\varphi_k}\right]$. L'étape $\beta_k$ comprend les sous-étapes suivantes :

βκ,1) Lors d'une première sous-étape $\beta_{k,1}$, on détermine la valeur d'un indice de sélection, parmi un ensemble de N indices, à savoir l'ensemble {1,2,3,4}, étant rappelé que N=4.

Pour déterminer cet indice de sélection, on génère un nombre aléatoire $\ell_k$ uniformément distribuée sur un intervalle de référence $I_{ref}$, ici $I_{ref}=[0,1]$. Le fait que le nombre aléatoire $\ell_k$ est uniformément distribué sur l'intervalle [0,1] signifie qu'elle est susceptible de prendre avec la même probabilité des valeurs numériques dans des sous-intervalles de l'intervalle [0,1] de mêmes longueurs respectives .

L'intervalle de référence $I_{ref}=[0,1]$ est divisé en N sous-intervalles $I_{rp}$, avec $1\leq n\leq4$, étant rappelé que N=4. Les différents intervalles $I_n$ sont disjoints et de longueurs respectives ici égales aux probabilités de sélection $p_n$ avec $1\leq n\leq4$ déterminées lors de la phase préliminaire Φ. On définit les sous-intervalles $I_n$ de la façon suivante :

$$I_1 = \left[0, p_1\right[$$

$$I_2 = \left[p_1, p_1 + p_2\right[$$

$$I_3 = \left[p_1 + p_2, p_1 + p_2 + p_3\right[$$

$$I_4 = \left[p_1 + p_2 + p_3, p_1 + p_2 + p_3 + p_4\right]$$

On détermine à quel sous-intervalle $I_n$ appartient le nombre aléatoire $\ell_k$ généré. On suppose que le nombre $\ell_k$ appartient au sous-intervalle $I_j$ de longueur $p_j$. On attribue alors à l'indice de sélection à déterminer l'indice j de la probabilité de sélection $p_j$ correspondant à la longueur de l'intervalle déterminé $I_j$. Par conséquent, l'indice de sélection j est tel que :

- si $\ell_k \in I_1$, alors j=1
- si $\ell_k \in I_2$, alors j=2
- si $\ell_k \in I_3$, alors j=3
- si $\ell_k \in I_4$, alors j=4

βκ,2 A l'aide de l'indice de sélection j déterminé à l'étape $\beta_{k,1}$, on sélectionne, parmi les quatre résultats arrondis de la fonction exponentielle complexe pour le pas de phase déterminés lors de la phase initiale Φ, celui ayant la probabilité de sélection d'indice j, soit $p_j$. Ainsi, on choisit que $Q_w\left[e^{j\varphi_s}\right] = r_j e^{j\varphi_{s_j}}$. Autrement dit, en modélisation vectorielle, on sélectionne le vecteur d'approximation $\vec{r}_{v_j}$ comme approximation du vecteur $\vec{r}_v$.

βκ,3) On multiplie le résultat arrondi de la fonction exponentielle complexe pour la phase précédente $\varphi_{k-1}$, soit $Q_w\left[e^{j\varphi_{k-1}}\right]$, et le résultat arrondi de la fonction exponentielle complexe pour le pas de phase $\varphi_s$, $Q_w\left[e^{j\varphi_s}\right]$, sélectionné à l'étape $\beta_{k,2}$. Autrement dit, on calcule l'expression $Q_w\left[e^{j\varphi_{k-1}}\right] \cdot Q_w\left[e^{j\varphi_s}\right]$ avec $Q_w\left[e^{j\varphi_s}\right] = \vec{r}_{v_j}$.

Le calcul consistant à multiplier deux arrondis ayant chacun une précision de *w* bits sur leur partie fractionnelle, le résultat obtenu a une partie fractionnelle codées sur 2*w*bits.

βκ,4) On calcule ensuite l'arrondi de $Q_w\left[e^{j\varphi_{k-1}}\right] \cdot Q_w\left[e^{j\varphi_s}\right]$ à l'aide de l'opérateur d'arrondi $Q_w[\cdot]$, c'est-à-dire l'arrondi avec une précision de *w* bits sur la partie fractionnelle du résultat de la sous-étape $\beta_{k,3}$. A cet effet, on tronque la partie fractionnelle du résultat obtenu à la sous-étape $\beta_{k,3}$ des *w* bits de poids les plus faibles. On obtient ainsi un résultat arrondi de $e^{j\varphi_k}$ avec une précision de *w* bits sur sa partie fractionnelle (correspondant aux *w* bits restants, de poids les plus forts), noté $Q_w\left[e^{j\varphi_k}\right]$.

βκ,5) On mémorise le résultat arrondi ainsi obtenu, $Q_w\left[e^{j\varphi_k}\right]$, dans la mémoire de stockage 1 afin d'alimenter l'étape de calcul pour la phase $\varphi_{k+1}$ suivante.

Lors de la sous-étape $\beta_{k,1}$, le nombre aléatoire $\ell_k$ peut être généré par un générateur de nombres pseudo-aléatoires, connu de l'homme du métier. Pour générer ce nombre aléatoire $\ell_k$, on peut également utiliser un lot de $w$ bits tronqués par l'opérateur d'arrondi $Q_w[.]$ à l'étape de calcul précédente $\beta_{k-1}$, et plus précisément à la sous-étape $\beta_{k\,1,4}$. En fait, à l'étape de calcul précédente $\beta_{k-1}$, l'opérateur d'arrondi a calculé deux résultats arrondis: l'un sur la partie réelle et l'autre sur la partie imaginaire. L'opérateur d'arrondi produit donc deux lots de $w$ bits tronqués. Pour générer le nombre aléatoire $\ell_k$, on peut utiliser l'un de ces deux lots ou bien un concaténation de $w/2$ bits de l'un des lots et de $w/2$ bits de l'autre lot. On détermine la valeur représentée par le lot de $w$ bits tronqués dans l'intervalle de référence $I_{ref}$, ici $I_{ref}=[0,1]$. Par exemple, si on prend $w=4$ et 4 bits tronqués valant 1 0 1 1, la valeur représentée par ces bits dans l'intervalle [0,1] est $2^{-1} + 2^{-3} + 2^{-4} = 0,6875$ . Autrement dit, on traduit les $w$ bits tronqués en une valeur comprise dans l'intervalle de référence $I_{ref}$. Cette valeur constitue le nombre aléatoire $\ell_k$ d'indice k

L'étape de calcul $\beta_k$ est ainsi réitérée pour des phases consécutives $\varphi_k$ séparées deux à deux par un pas de phase $\varphi_s$ tant qu'un signal numérique de fréquence $f_c$ doit être généré. Une étape de test $\tau_k$ pour vérifier si la fréquence $f_c$ doit être encore générée est donc réalisée à la fin de chaque étape $\beta_k$ S'il convient de continuer la génération de fréquence $f_c$, l'étape $\beta_{k+1}$ est exécutée. Sinon, le procédé est interrompu.

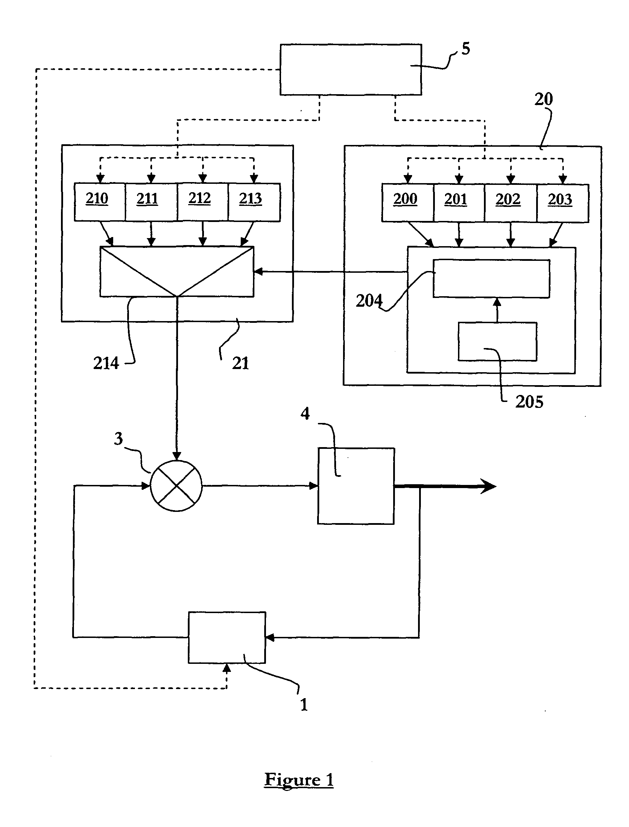

On va maintenant décrire, en référence à la figure 1, une forme particulière de réalisation du dispositif de génération d'une fréquence numérique, apte à mettre en oeuvre le procédé qui vient d'être décrit.

Le dispositif représenté sur la figure 1 comprend une mémoire de stockage 1, un module de sélection 2, un multiplicateur 3 et un opérateur d'arrondi 4.

La mémoire de stockage 1 est ici un registre à décalage destiné à recevoir et à stocker provisoirement le résultat de chaque étape de calcul $\beta_k$, autrement dit l'arrondi $Q_w\left[e^{j\varphi_k}\right]$, obtenu à l'issue de l'étape de calcul $\beta_k$. Le résultat $Q_w\left[e^{j\varphi_k}\right]$ d'une étape de calcul $\beta_k$ est stocké dans la mémoire 1 à la place du résultat $Q_w\left[e^{j\varphi_{k-1}}\right]$ de l'étape de calcul précédente $\beta_{k-1}$. A l'initialisation, c'est-à-dire à l'étape $\beta_0$, la mémoire de stockage 1 est réinitialisée afin de stocker l'arrondi de la fonction exponentielle complexe pour la phase initiale $\varphi_0$, c'est-à-dire $Q_w\left[e^{j\varphi_0}\right]$.

Le module de sélection 2 comprend

- un sous-module 20 de détermination d'un indice de sélection j ;
- un sous-module 21 de fourniture d'un résultat approché de la fonction exponentielle complexe pour le pas de phase $\varphi_s$.
  Le sous-module 20 de détermination d'un indice de sélection j comprend
- N mémoires 200-203, avec N=4, de stockage des probabilités respectives $p_1$, $p_2$, $p_4$, $p_4$ de sélection des quatre résultats approchés de la fonction exponentielle complexe pour le pas de phase $\varphi_s$;
- un générateur pseudo-aléatoire 204 destiné à générer le nombre aléatoire $\ell_k$ de façon uniformément repartie sur l'intervalle de référence $I_{réf}=[0,1]$;
- un bloc 205 de détermination d'un indice de sélection j relié aux quatre mémoires 200 à 203 et à la sortie du générateur pseudo-aléatoire 204.

Le sous-module 20 est agencé pour mettre en oeuvre la sous-étape $\beta_{k,1}$. En fonctionnement, à chaque étape de calcul $\beta_k$, le générateur 204 génère le nombre aléatoire $\ell_k$ uniformément réparti sur l'intervalle de référence [0,1] et la fournit au bloc 205 de détermination d'un indice de sélection j. Le bloc 205 détermine à quel sous-intervalle le nombre $\ell_k$ appartient parmi les quatre sous-intervalles $I_1$, $I_2$, $I_3$ et $I_4$ de l'intervalle de référence [0,1] qui sont définis par les probabilités $p_1$, $p_2$, $p_3$, $p_4$ de la façon suivante :

$$I_1 = \left[0, p_1\right[; I_2 = \left[p_1, p_1 + p_2\right[; I_3 = \left[p_1 + p_2, p_1 + p_2 + p_3\right[; I_4 = \left[p_1 + p_2 + p_3, p_1 + p_2 + p_3 + p_4\right]$$

Le nombre aléatoire $\ell_k$ appartenant à l'intervalle $I_j$, le sous-module 20 attribue la valeur j à l'indice de sélection et fournit celui-ci au sous-module 21.

Dans le cas où le nombre aléatoire $\ell_k$ est généré à partir des $w$ bits tronqués à l'étape de calcul précédente $\beta_{k-1}$, le dispositif comprend une connexion entre une sortie supplémentaire de l'opérateur d'arrondi, destinée à délivrer les $w$ bits tronqués par l'opérateur d'arrondi à chaque étape de calcul $\beta_k$, et une entrée supplémentaire du sous-module 20 de détermination de l'indice de sélection j. En outre, le sous-module 20 comprend une mémoire de stockage des $w$ bits tronqués fournis à chaque étape de calcul par l'opérateur d'arrondi 4 et des moyens pour déterminer la valeur représentée par ces $w$ bits tronqués, laquelle correspond au nombre aléatoire utilisé lors de l'étape de calcul suivante pour déterminer l'indice de sélection j.

En outre, lors l'étape initiale $\beta_0$ de la boucle de calcul (c'est-à-dire pour k-0), le module 20 de détermination d'un indice de sélection j est agencé pour attribuer à l'indice de sélection j la valeur de l'indice $i$ de la probabilité $p_i$ la plus élevée parmi les quatre probabilités $p_1$, $p_2$, $p_3$, $p_4$.

Le sous-module 21 de fourniture d'un résultat approché de la fonction exponentielle complexe pour le pas de phase $\varphi_s$ comprend

- quatre mémoires 210-213 de stockage des quatre approximations $r_1 e^{j\varphi s1}$, $r_2 e^{j\varphi s2}$, $r_3 e^{j\varphi s3}$, $r_4 e^{j\varphi s4}$ de la fonction exponentielle complexe pour le pas de phase $\varphi_s$, modélisées par les quatre vecteurs d'approximation $\overrightarrow{rv_1}, \overrightarrow{rv_2}, \overrightarrow{rv_3}, \overrightarrow{rv_4}$
- un multiplexeur 214 connecté en entrée, d'une part, aux quatre mémoires 200-203 et, d'autre part, au module 20 de détermination d'un indice de sélection j , et en sortie au multiplicateur 3.

Le multiplexeur 214 est agencé pour sélectionner l'une des quatre approximations de la fonction exponentielle complexe pour le pas de phase $\varphi_s$ stockées dans les mémoires 210 à 213, en fonction de la valeur de l'indice de sélection j transmise par le sous-module 20. En fonctionnement, le multiplexeur sélectionne l'approximation $r_j e^{j\varphi_{sl}}$ correspondant à l'indice j reçu.

En fonctionnement, à la sous-étape de calcul $\beta_k$, le multiplicateur 3 est alimenté en entrée par le résultat approché de la fonction exponentielle complexe pour la phase $\varphi_{k-1}$, stocké dans la mémoire 1, et par le résultat approché de la fonction exponentielle complexe pour le pas de phase $\varphi_s$, fourni par le sous-module 21 . Il multiplie les deux résultats approchés $\left( Q_w\left[ e^{j\varphi_{k-1}} \right] \cdot Q_w\left[ e^{j\varphi_s} \right] \text{ avec } Q_w\left[ e^{j\varphi_s} \right] = \overrightarrow{rv_j} \right)$ et fournit le résultat obtenu à l'opérateur d'arrondi 4. Celui-ci détermine l'arrondi du résultat de la multiplication en tronquant les $w$ bits de poids les plus faibles de la partie fractionnelle afin d'obtenir un résultat approché de $e^{j\varphi_k}$ avec une précision de $w$ bits sur sa partie fractionnelle, noté $Q_w\left[ e^{j\varphi_k} \right]$. Ce résultat est fourni en sortie du dispositif et parallèlement enregistré dans la mémoire 1, pour la sous-étape de calcul suivante $\beta_{k+1}$, à la place de $Q_w\left[ e^{j\varphi_{k-1}} \right]$.

Le dispositif de génération numérique de fréquence comprend également un module de configuration 5 et un module de commande 6, en l'espèce un microprocesseur.

Le module de configuration 5 est agencé pour mettre en oeuvre les deux étapes $\Phi_1$, $\Phi_2$ de la phase préliminaire $\Phi$, afin de déterminer, à partir d'un pas de phase $\varphi_s$ fourni, les quatre approximations $r_1 e^{j\varphi s1}$, $r_2 e^{j\varphi s2}$, $r_3 e^{j\varphi s3}$, $r_4 e^{j\varphi s4}$ de la fonction exponentielle complexe pour le pas de phase $\varphi_s$ (modélisées par les quatre vecteurs d'approximation $\overrightarrow{r_{V1}}, \overrightarrow{r_{V2}}, \overrightarrow{r_{V3}}, \overrightarrow{r_{V4}}$ et pour calculer les quatre probabilités de sélection correspondantes $p_1$, $p_2$, $p_3$, $p_4$. Les quatre approximations de la fonction exponentielle complexe pour le pas de phase $\Phi_s$ sont stockées dans les mémoires 210 à 213 respectivement et leurs probabilités correspondantes sont stockées dans les mémoires 200 à 203.

En outre, le module de configuration 5 est agencé pour réinitialiser la mémoire 1, en y enregistrant le résultat approché de la fonction exponentielle complexe pour la phase initiale $\varphi_0$, stocké en mémoire, au début de chaque nouvelle boucle de calcul. Le dispositif de génération de fréquence pourrait lui même être adapté pour calculer la valeur d'initialisation $Q_w\left[ e^{j\varphi_0} \right]$, par exemple par une mise en oeuvre de la méthode dite "CORDIC" qui permet de calculer des fonctions trigonométriques à la précision désirée.

Tous les éléments du dispositif sont connectés au module de commande 6 qui est agencé pour en commander le fonctionnement.

Les éléments 204 et 205 du module de sélection, le multiplexeur 214, le multiplicateur 3, l'opérateur d'arrondi 4 et le module de configuration 5 sont, dans l'exemple particulier décrit, des modules logiciels formant un programme d'ordinateur. L'invention concerne donc aussi un programme d'ordinateur pour un dispositif de génération numérique d'une fréquence donnée comprenant des instructions logicielles pour mettre en oeuvre le procédé précédemment décrit, lorsque ledit programme est exécuté par le dispositif. Le programme peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio. L'invention concerne aussi un support d'enregistrement lisible par un ordinateur sur lequel est enregistré le programme.

En variante, ces modules logiciels pourraient au moins partiellement être remplacés par des moyens matériels.

Le dispositif de génération numérique de fréquence précédemment décrit peut être intégré dans un équipement de communication radio.

Dans la description qui précède, le nombre N de résultats arrondis de la fonction exponentielle complexe pour le pas de phase est égal à quatre. L'invention ne se limite cependant pas à cet exemple particulier de réalisation. Bien entendu, l'invention pourrait utiliser un nombre N de résultats arrondis inférieur ou supérieur à quatre.

L'invention s'applique à toutes les techniques nécessitant la génération numérique d'une fréquence : instruments numériques de musique, synthèse audio, radiocommunication. Dans le domaine de la radiocommunication, l'invention peut être utilisée dans le cadre des opérations suivantes :

- translation en fréquence (modulation, démodulation),
- asservissement de la fréquence porteuse en réception,
- génération des coefficients de FFT,
- filtrage multibande, etc.

Dans la description qui précède, on a explicité une nouvelle méthode de génération de nombres aléatoires. Selon cette nouvelle méthode, pour générer une succession de nombres aléatoires, on utilise les $w$ bits tronqués par l'opérateur d'arrondi de la partie fractionnelle des résultats successivement obtenus, pour des phases consécutives $\varphi_k$ (avec k=1, 2, ...) séparées par le pas de phase $\varphi_s$, par la multiplication entre les deux résultats arrondis d'une fonction trigonométrique respectivement pour la phase $\varphi_k$ et pour le pas de phase $\varphi_s$. Une telle méthode de génération de nombres aléatoire peut être utilisée dans des applications nécessitant une génération de nombres aléatoires, autres que la génération de fréquence. Elle peut être implémentée dans un générateur pseudo-aléatoire ayant comme paramètres de configuration la phase initiale $\varphi_0$ et le pas de phase $\varphi_s$.

## Revendications

1. Procédé de génération numérique d'une fréquence donnée à l'aide d'un dispositif, dans lequel

    - le dispositif réitère une étape de calcul d'au moins une fonction trigonométrique pour des phases consécutives séparées par un pas de phase $\varphi_s$ qui est fonction de la fréquence à générer, et
    - lors de l'étape de calcul de ladite fonction trigonométrique pour une phase d'indice k, $k$ représentant un indice d'incrémentation de phase suivant le pas de phase $\varphi_s$, le dispositif calcule un résultat de la fonction trigonométrique pour la phase d'indice k à partir de résultats arrondis de la fonction trigonométrique pour la phase précédente d'indice *k-1* et pour ledit pas de phase respectivement;

    **caractérisé par le fait que**, un nombre $N$ de résultats arrondis de la fonction trigonométrique pour ledit pas de phase $\varphi_s$ et des probabilités respectives $p_i$ de sélection desdits $N$ résultats arrondis étant fournis, le dispositif sélectionne l'un des $N$ résultats arrondis pour le pas de phase $\varphi_s$, en tenant compte des probabilités de sélection déterminées $p_i$, pour calculer le résultat de la fonction trigonométrique pour la phase d'indice $k$.

2. Procédé selon la revendication 1, dans lequel, pour sélectionner l'un des $N$ résultats arrondis pour le pas de phase $\varphi_s$ en tenant compte des probabilités de sélection déterminées $p_i$,

    - le dispositif génère un nombre aléatoire (1) uniformément distribué sur un intervalle de référence;
    - l'intervalle de référence étant divisé en $N$ intervalles $I_n$ disjoints de longueurs respectives proportionnelles aux probabilités $p_i$ avec $1 \leq i \leq N$ , le dispositif détermine à quel intervalle $I_j$, parmi lesdits $N$ intervalles $I_n$, appartient le nombre aléatoire généré (I);
    - et le dispositif sélectionne, parmi les $N$ résultats arrondis de la fonction trigonométrique pour le pas de phase $\varphi_s$, celui ayant la probabilité de sélection $p_j$ correspondant à la longueur de l'intervalle déterminé $I_j$.

3. Procédé selon la revendication 2, dans lequel les résultats arrondis étant calculés avec une précision finie de $w$ de bits sur les parties fractionnelles, le dispositif arrondit le résultat de la fonction trigonométrique pour la phase d'indice $k$, obtenu par multiplication des résultats arrondis de la fonction trigonométrique pour la phase précédente d'indice *k-1* et pour le pas de phase respectivement, en tronquant la partie fractionnelle dudit résultat pour la phase d'indice $k$ d'une portion de $w$ bits et le dispositif détermine la valeur représentée par ladite portion de $w$ bits tronqués dans l'intervalle de référence afin de générer le nombre aléatoire.

**4.** Procédé selon l'une des revendications 1 à 3, dans lequel il est prévu une phase préliminaire comportant

■ une étape de détermination par le dispositif des $N$ résultats arrondis de la fonction trigonométrique pour ledit pas de phase $\varphi_s$;
■ une étape de détermination par le dispositif de probabilités respectives $p_i$ de sélection des $N$ valeurs approchées possibles, avec $1 \leq i \leq N$.

**5.** Procédé selon la revendication 4, dans lequel le nombre $N$ de résultats arrondis de la fonction trigonométrique pour le pas de phase $\varphi_s$ est égal à quatre et les quatre résultats arrondis correspondent aux quatre sommets d'un carré contenant un point du cercle trigonométrique représentant le pas de phase $\varphi_s$.

**6.** Procédé selon l'une des revendications 4 et 5, dans lequel les $N$ probabilités respectives $p_i$ avec $1 \leq i \leq N$ de sélection des $N$ résultats arrondis sont déterminées de manière à ce que la moyenne de l'erreur d'arrondi soit nulle.

**7.** Procédé selon l'une des revendications 4 à 6, dans lequel les $N$ probabilités respectives $p_i$ avec $1 \leq i \leq N$ de sélection des $N$ résultats arrondis sont déterminées de manière à minimiser la variance de l'erreur.

**8.** Procédé selon l'une des revendications 4 à 7, dans lequel les $N$ probabilités respectives $p_i$ avec $1 \leq i \leq N$ de sélection des $N$ résultats arrondis sont déterminées de manières à ce que la somme des probabilités de sélection respectives des $N$ résultats arrondis soit égale à 1.

**9.** Procédé selon l'une des revendications 4 à 8, dans lequel, pour déterminer les N probabilités respectives $p_i$ avec $1 \leq i \leq N$ de sélection des $N$ résultats arrondis, le dispositif résout le système d'équations suivant :

$$- \sum_{i=1}^{4} p_i = 1 \quad (a)$$

$$- \sum_{i=1}^{4} p_i \cdot \overrightarrow{e_{v_i}} = 0 \Leftrightarrow \begin{cases} \sum_{i=1}^{4} p_i \cdot e_{x_i} = 0 \quad (b) \\ \sum_{i=1}^{4} p_i \cdot e_{y_i} = 0 \quad (c) \end{cases}$$

$$- \min \left\{ \sum_{i=1}^{4} \left| p_i \cdot \overrightarrow{e_{v_i}} \right|^2 \right\} \quad (d)$$

où $\overrightarrow{e_{v_i}}$ représentent des vecteurs d'erreur d'approximation avec $\overrightarrow{e_{v_i}} = \begin{pmatrix} e_{x_i} \\ e_{y_i} \end{pmatrix}$ dans un repère orthonormé.

**10.** Dispositif de génération numérique d'une fréquence donnée comportant des moyens de calcul itératif agencés pour réitérer le calcul d'au moins une fonction trigonométrique pour des phases consécutives séparées par un pas de phase $\varphi_s$ qui est fonction de la fréquence à générer, le calcul de ladite fonction trigonométrique pour une phase d'indice $k$, $k$ représentant un indice d'incrémentation de phase suivant le pas de phase $\varphi_s$, étant réalisé à partir d'un résultat arrondi de la fonction trigonométrique pour la phase précédente d'indice $k$-1 et d'un résultat arrondi de la fonction trigonométrique pour ledit pas de phase respectivement **caractérisé par le fait qu'**il comprend

- des moyens (210-213) de stockage d'un nombre $N$ de résultats arrondis de la fonction trigonométrique pour ledit pas de phase $\varphi_s$
- des moyens (200-203) de stockage de probabilités respectives $p_i$ de sélection desdits $N$ résultats arrondis
- des moyens (214) pour sélectionner l'un des $N$ résultats arrondis pour le pas de phase $\varphi_s$, en tenant compte des probabilités de sélection déterminées $p_i$, pour calculer le résultat de la fonction trigonométrique pour la phase d'indice $k$.

**11.** Equipement de communication radio intégrant le dispositif de génération numérique de fréquence selon la revendication 10.

**12.** Programme d'ordinateur pour un dispositif de génération numérique d'une fréquence donnée comprenant des instructions logicielles pour mettre en oeuvre le procédé selon l'une des revendications 1 à 9, lorsque ledit programme est exécuté par le dispositif.

**13.** Support d'enregistrement lisible par un ordinateur sur lequel est enregistré le programme selon la revendication 12.

**Claims**

**1.** Method of numerically generating a given frequency by means of a device, in which

- a step of calculating at least one trigonometric function for consecutive phases separated by a phase gap $\varphi_s$ which is dependent on the frequency to be generated is repeated by the device, and
- during the step of calculating said trigonometric function for a phase of index $k$, $k$ representing a phase incrementation index according to the phase gap $\varphi_s$, a result of the trigonometric function for the phase of index $k$ is calculated by the device on the basis of rounded results of the trigonometric function for the previous phase of index $k$-$1$ and for said phase gap respectively;

**characterized in that**, a number $N$ of rounded results of the trigonometric function for said phase gap $\varphi_s$ and respective probabilities $p_i$ of selecting said $N$ rounded results being provided, one of the $N$ rounded results for the phase gap $\varphi_s$ is selected by the device, taking account of the determined selection probabilities $p_i$, to calculate the result of the trigonometric function for the phase of index $k$.

**2.** Method according to Claim 1, in which, to select one of the $N$ rounded results for the phase gap $\varphi_s$ taking account of the determined selection probabilities $p_i$,

- a random number (1) uniformly distributed over a reference interval is generated by the device;
- the reference interval being divided into $N$ disjoint intervals $I_n$ of respective lengths proportional to the probabilities $p_i$ with $1 \leq i \leq N$, the interval $I_j$, from among said $N$ intervals $I_n$, to which the generated random number (1) belongs, is determined by the device;
- and, from among the $N$ rounded results of the trigonometric function for the phase gap $\varphi_s$, that having the selection probability $p_j$ corresponding to the length of the determined interval $I_j$ is selected by the device.

**3.** Method according to Claim 2, in which the rounded results being calculated with a finite precision of $w$ bits on the fractional parts, the result of the trigonometric function for the phase of index $k$, obtained by multiplication of the rounded results of the trigonometric function for the previous phase of index $k$-$1$ and for the phase gap respectively, is rounded by the device by truncating the fractional part of said result for the phase of index $k$ by a portion of $w$ bits and the value represented by said portion of $w$ bits truncated in the reference interval is determined by the device so as to generate the random number.

**4.** Method according to one of Claims 1 to 3, in which there is provided a preliminary phase comprising

■ a step of determining the $N$ rounded results of the trigonometric function for said phase gap $\varphi_s$ by the device;
■ a step of determining respective probabilities $p_i$ of selecting the $N$ possible approximated values, with $1 \leq i \leq N$ by the device.

**5.** Method according to Claim 4, in which the number $N$ of rounded results of the trigonometric function for the phase gap $\varphi_s$ is equal to four and the four rounded results correspond to the four vertices of a square containing a point of the trigonometric circle representing the phase gap $\varphi_s$.

**6.** Method according to one of Claims 4 and 5, in which the $N$ respective probabilities $p_i$ with $1 \leq i \leq N$ of selecting the $N$ rounded results are determined in such a way that the mean of the rounding error is zero.

**7.** Method according to one of Claims 4 to 6, in which the $N$ respective probabilities $p_i$ with $1 \leq i \leq N$ of selecting the $N$ rounded results are determined so as to minimize the variance of the error.

8. Method according to one of Claims 4 to 6, in which the *N* respective probabilities $p_i$, with $1 \le i \le N$ of selecting the *N* rounded results are determined in such ways that the sum of the respective probabilities of selecting the *N* rounded results is equal to 1.

9. Method according to one of Claims 4 to 8, in which, to determine the N respective probabilities $p_i$ with $1 \le i \le N$ of selecting the *N* rounded results, the following system of equations is solved by the device:

$$- \quad \sum_{i=1}^{4} p_i = 1 \quad (a)$$

$$- \quad \sum_{i=1}^{4} p_i \cdot \overrightarrow{e_{v_i}} = 0 \Leftrightarrow \begin{cases} \sum_{i=1}^{4} p_i \cdot e_{x_i} = 0 & (b) \\ \sum_{i=1}^{4} p_i \cdot e_{y_i} = 0 & (c) \end{cases}$$

$$- \min \left\{ \sum_{i=1}^{4} \left| p_i \cdot \overrightarrow{e_{v_i}} \right|^2 \right\} \quad (d)$$

where $\overrightarrow{e_{v_i}}$ represent approximation error vectors with $\overrightarrow{e_{v_i}} = \begin{pmatrix} e_{x_i} \\ e_{y_i} \end{pmatrix}$ in an orthonormal reference frame.

10. Device for numerically generating a given frequency comprising iterative calculation means designed to repeat the calculation of at least one trigonometric function for consecutive phases separated by a phase gap $\varphi_S$ which is dependent on the frequency to be generated, the calculation of said trigonometric function for a phase of index *k*, *k* representing a phase incrementation index according to the phase gap $\varphi_S$, being carried out on the basis of a rounded result of the trigonometric function for the previous phase of index *k-1* and of a rounded result of the trigonometric function for said phase gap respectively, **characterized in that** it comprises

- means (210 - 243) for storing a number *N* of rounded results of the trigonometric function for said phase gap $\varphi_S$
- means (200 - 203) for storing respective probabilities $p_i$ of selecting said *N* rounded results
- means (214) for selecting one of the *N* rounded results for the phase gap $\varphi_S$, taking account of the determined selection probabilities $p_i$, to calculate the result of the trigonometric function for the phase of index k.

11. Item of radiocommunication equipment integrating the digital frequency generation device according to Claim 10.

12. Computer program for a device for numerically generating a given frequency comprising software instructions for implementing the method according to one of Claims 1 to 9, when said program is executed by the device.

13. Recording medium readable by a computer on which the program according to Claim 12 is recorded.


**Patentansprüche**

1. Verfahren zur digitalen Erzeugung einer gegebenen Frequenz mit Hilfe einer Vorrichtung, bei dem

- die Vorrichtung einen Schritt der Berechnung mindestens einer trigonometrischen Funktion für aufeinanderfolgende Phasen wiederholt, die durch einen Phasenschritt $\varphi_S$ getrennt sind, der von der zu erzeugenden Frequenz abhängt, und
- im Schritt der Berechnung der trigonometrischen Funktion für eine Phase mit dem Index k, wobei k einen Phaseninkrementierungsindex gemäß dem Phasenschritt $\varphi_S$ darstellt, die Vorrichtung ein Ergebnis der trigonometrischen Funktion für die Phase mit dem Index k ausgehend von gerundeten Ergebnissen der trigonometrischen Funktion für die vorhergehende Phase mit dem Index k-1 bzw. für den Phasenschritt berechnet; **dadurch gekennzeichnet, dass**, wenn eine Anzahl N von gerundeten Ergebnissen der trigonometrischen Funktion für den Phasenschritt $\varphi_s$ und Auswahlwahrscheinlichkeiten $p_i$ der N gerundeten Ergebnisse geliefert werden, die Vorrichtung eines der N gerundeten Ergebnisse für den Phasenschritt $\varphi_s$ unter Berücksichtigung der bestimmten Auswahlwahrscheinlichkeiten $p_i$ auswählt, um das Ergebnis der trigonometrischen Funktion für die Phase mit dem Index k zu berechnen.

2. Verfahren nach Anspruch 1, bei dem zur Auswahl eines der N gerundeten Ergebnisse für den Phasenschritt $\varphi_s$ unter Berücksichtigung der bestimmten Auswahlwahrscheinlichkeiten $p_i$,

   - die Vorrichtung eine Zufallszahl (I) erzeugt, die gleichmäßig über ein Bezugsintervall verteilt ist;
   - da das Bezugsintervall in N getrennte Intervalle In mit Längen jeweils proportional zu den Wahrscheinlichkeiten $p_i$ mit $1 \leq i \leq N$ aufgeteilt ist, die Vorrichtung bestimmt, zu welchem Intervall $I_j$ unter den N Intervallen $I_n$ die erzeugte Zufallszahl (I) gehört;
   - und die Vorrichtung unter den N gerundeten Ergebnissen der trigonometrischen Funktion für den Phasenschritt $\varphi_s$ dasjenige auswählt, das die Auswahlwahrscheinlichkeit $p_j$ entsprechend der Länge des bestimmten Intervalls $I_j$ hat.

3. Verfahren nach Anspruch 2, bei dem, da die gerundeten Ergebnisse mit einer endlichen Präzision von w von Bits in den Nachkommastellen berechnet werden, die Vorrichtung das Ergebnis der trigonometrischen Funktion für die Phase mit dem Index k, das durch Multiplikation der gerundeten Ergebnisse der trigonometrischen Funktion für die vorhergehenden Phase mit dem Index k-1 bzw. für den Phasenschritt erhalten wird, rundet, indem sie die Nachkommastelle des Ergebnisses für die Phase mit dem Index k um einen Abschnitt von w Bits kürzt, und die Vorrichtung den durch den Abschnitt von w gekürzten Bits dargestellten Wert im Bezugsintervall bestimmt, um die Zufallszahl zu erzeugen.

4. Verfahren nach einem der Ansprüche 1 bis 3, bei dem eine vorhergehende Phase vorgesehen ist, die aufweist

   ■ einen Schritt der Bestimmung durch die Vorrichtung der N gerundeten Ergebnisse der trigonometrischen Funktion für den Phasenschritt $\varphi_s$;
   ■ einen Schritt der Bestimmung durch die Vorrichtung von jeweiligen Auswahlwahrscheinlichkeiten $p_i$ der N möglichen angenäherten Werte, mit $1 \leq i \leq N$.

5. Verfahren nach Anspruch 4, bei dem die Anzahl N von gerundeten Ergebnissen der trigonometrischen Funktion für den Phasenschritt $\varphi_s$ gleich vier ist, und die vier gerundeten Ergebnisse den vier Eckpunkten eines Quadrats entsprechen, das einen Punkt des den Phasenschritt $\varphi_s$ darstellenden trigonometrischen Kreises enthält.

6. Verfahren nach einem der Ansprüche 4 und 5, bei dem die N Auswahlwahrscheinlichkeiten $p_i$ mit $1 \leq i \leq N$ der N gerundeten Ergebnisse so bestimmt werden, dass der Mittelwert des Rundungsfehlers Null ist.

7. Verfahren nach einem der Ansprüche 4 bis 6, bei dem die N Auswahlwahrscheinlichkeiten $p_i$ mit $1 \leq i \leq N$ der N gerundeten Ergebnisse so bestimmt werden, dass die Varianz des Fehlers minimiert wird.

8. Verfahren nach einem der Ansprüche 4 bis 7, bei dem die N Auswahlwahrscheinlichkeiten $p_i$ mit $1 \leq i \leq N$ der N gerundeten Ergebnisse so bestimmt werden, dass die Summe der jeweiligen Auswahlwahrscheinlichkeiten der N gerundeten Ergebnisse gleich 1 ist.

9. Verfahren nach einem der Ansprüche 4 bis 8, bei dem zur Bestimmung der N Auswahlwahrscheinlichkeiten $p_i$ mit $1 \leq i \leq N$ der N gerundeten Ergebnisse die Vorrichtung das folgende System von Gleichungen löst:

$$- \quad \sum_{i=1}^{4} p_i = 1 \quad (a)$$

$$- \sum_{i=1}^{4} p_i \cdot \overrightarrow{e_{v_i}} = 0 \Leftrightarrow \begin{cases} \sum_{i=1}^{4} p_i \cdot e_{x_i} = 0 & (b) \\ \sum_{i=1}^{4} p_i \cdot e_{y_i} = 0 & (c) \end{cases}$$

$$- \min \left\{ \sum_{i=1}^{4} \left| p_i \cdot \overrightarrow{e_{v_i}} \right|^2 \right\} \quad (d)$$

wobei $\overrightarrow{e_{v_i}}$ Näherungsfehlervektoren mit $\overrightarrow{e_{v_i}} = \begin{pmatrix} e_{x_i} \\ e_{y_i} \end{pmatrix}$ in einem orthonormierten Bezugspunkt darstellen.

**10.** Vorrichtung zur digitalen Erzeugung einer gegebenen Frequenz, die Einrichtungen zu iterativen Berechnung aufweist, welche eingerichtet sind, um die Berechnung mindestens einer trigonometrischen Funktion für aufeinanderfolgende Phasen zu wiederholen, die durch einen Phasenschritt $\varphi_s$ getrennt sind, der von der zu erzeugenden Frequenz abhängt, wobei die Berechnung der trigonometrischen Funktion für eine Phase mit dem Index k, wobei k einen Phaseninkrementierungsindex gemäß dem Phasenschritt $\varphi_s$ darstellt, ausgehend von einem gerundeten Ergebnis der trigonometrischen Funktion für die vorhergehende Phase mit dem Index k-1 bzw. einem gerundeten Ergebnis der trigonometrischen Funktion für den Phasenschritt ausgeführt wird, **dadurch gekennzeichnet, dass** sie enthält

- Einrichtungen (210-213) zum Speichern einer Anzahl N von gerundeten Ergebnissen der trigonometrischen Funktion für den Phasenschritt $\varphi_s$
- Einrichtungen (200-203) zum Speichern von Auswahlwahrscheinlichkeiten $p_i$ der N gerundeten Ergebnisse
- Einrichtungen (214) zur Auswahl eines der N gerundeten Ergebnisse für den Phasenschritt $\varphi_s$, unter Berücksichtigung der bestimmten Auswahlwahrscheinlichkeiten $p_i$, um das Ergebnis der trigonometrischen Funktion für die Phase mit dem Index k zu berechnen.

**11.** Funkkommunikationsausrüstung, die die Vorrichtung zur digitalen Frequenzerzeugung nach Anspruch 10 umfasst.

**12.** Computerprogramm für eine Vorrichtung zur digitalen Erzeugung einer gegebenen Frequenz, das Software-Anweisungen zur Durchführung des Verfahrens nach einem der Ansprüche 1 bis 9 enthält, wenn das Programm von der Vorrichtung ausgeführt wird.

**13.** Computerlesbarer Aufzeichnungsträger, in dem das Programm nach Anspruch 12 gespeichert ist.

**Figure 1**

$$r\,\overline{v}_i \quad \Phi_1$$

$$p_i \quad \Phi_2$$

$$Q_{w'}\left[e^{j\varphi_0}\right] \quad \beta_0$$

$$Q_{w'}\left[e^{j\varphi_1}\right] \quad \beta_1$$

$$k=k+1 \quad Q_w\left[e^{j\varphi_k}\right] \quad \beta_k$$

$$f_c \text{ à générer?} \quad \tau_k$$

oui

non

**FIN**

**<u>Figure 2</u>**

**Figure 3A**

**Figure 3B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4285044 A
- US 4577287 A
- US 4937773 A
- US 4927773 A